# EUROPEAN PATENT APPLICATION

(11) **EP 4 841 368 A1**
(43) Date of publication of application: **18.11.2026**
(21) Application number: 25305702.0
(22) Date of filing: 16.05.2025
(51) Int. Cl.: G05B 9/03, G05B 19/05, G05B 19/042

(54) **INDUSTRIAL AUTOMATION SYSTEM**

(71) Applicant: Schneider Electric Industries SAS, 92500 Rueil Malmaison (FR)
(72) Inventor: HALISEVA, Matti Juhani, Aschaffenburg (DE); PLATZER, Christian Wolfgang, 97072 Würzburg (DE); MISHRA, Ajay, Irvine, California (DE)
(74) Representative: Manitz Finsterwald Patent- und Rechtsanwaltspartnerschaft mbB

(57) **Abstract**

The invention is directed at an industrial automation system, comprising: at least one local computing unit for executing a first function block of a first safety function, and at least one remote computing unit for executing a second function block of the first safety function, wherein the local computing unit and the remote computing unit are geographically separated and communicate via a network.

## Description

The invention relates to an industrial automation system and a method for executing a safety function.

Industrial automation systems increasingly rely on programmable safety controllers to ensure reliable operation and protection of personnel and machinery. These controllers are responsible for executing safety-related functions in compliance with recognized functional safety standards such as IEC 61508, IEC 62061, IEC 61511 or ISO 13849.

Traditionally, safety functions are implemented on dedicated, certified hardware platforms tailored to meet specific Safety Integrity Levels (SILs). Attaining higher safety levels, such as SIL 3 or SIL 4, typically involves significant hardware redundancy-requiring multiple physical channels, diagnostic coverage, and voting mechanisms. While such architectures provide high reliability, they are often costly, hardware-intensive, and inflexible, particularly in modular or dynamically reconfigurable environments.

The fixed assignment of safety functions to specific hardware resources limits the scalability and adaptability of safety systems. Changes in safety logic may necessitate hardware modifications or recertification, which increases engineering effort and reduces reusability. These challenges are increasingly evident as modern automation systems evolve toward distributed, service-oriented architectures.

Hence, it is an object of the invention to address the foregoing problems.

This object is satisfied by the subject-matter of claim 1 and 15.

The invention is directed at an industrial automation system, comprising:
at least one local computing unit for executing a first function block of a first safety function, and
at least one remote computing unit for executing a second function block of the first safety function,
wherein the local computing unit and the remote computing unit are geographically separated and communicate via a network.

In other words, parts of a safety function may be distributed to different computing units located on geographically different locations. The local computing unit may e.g. perform a first calculation regarding the safety function and the remote computing unit may perform a second calculation regarding the safety function which may be independent from the first calculation. The local computing unit and the remote computing unit may further exchange calculation results and/or other suitable data for comparison. The first and second function block of the safety function may be configured to redundantly perform the same function, in particular independently of one another. In response to the comparison result, a corresponding safety reaction may be triggered. Any required communication between the computing units may be performed via a corresponding network.

The network may comprise an industrial Ethernet, a fieldbus system, or any other suitable wired or wireless communication infrastructure capable of supporting deterministic or real-time data exchange. The communication between the local and remote computing units enables the distributed execution of automation and/or safety-related functions, such that function blocks can interact, exchange state information or coordinate processing tasks across separate physical devices.

To ensure reliable and secure operation, the communication may include integrity checks, timestamping, sequence control, or redundancy mechanisms. In safety-critical applications, data exchanged between the local and remote computing units may be subject to safety protocol layers or certified communication profiles in accordance with applicable standards (e.g., PROFIsafe, CIP Safety, or Safety over EtherCAT). This networked interaction allows computing units that are geographically separated to operate cooperatively, enabling flexible deployment of distributed control and safety architectures. A computing unit may be, for example, a programmable logic controller (PLC), an industrial PC (IPC), an embedded controller, a system-on-chip (SoC), a microcontroller unit (MCU), a virtualized controller, an edge computing node, or a field device with integrated processing capabilities

A safety function may refer to a technical function intended to detect hazardous conditions and to reduce the associated risks to persons, machinery, or the environment to an acceptable residual level by means of defined safety measures. A safety function may, in particular, comprise the detection of hazardous events, the initiation of safety-related responses (e.g., shutdowns, interlocks, or speed limitations), and the monitoring of safety-critical parameters. Implementation is typically carried out through a combination of sensing devices, logic elements (e.g., safety controllers), and actuators, in accordance with the requirements of applicable safety standards such as IEC 61508, IEC 62061, IEC 61511 or ISO 13849.

A safety function may comprise any function intended to reduce risk to a tolerable level by achieving or maintaining a safe state of a machine or process. Examples of safety functions include, but are not limited to: an emergency stop function (E-Stop); a safe torque off (STO) function that disables torque-generating energy in a drive; safe speed monitoring (SSM); safe stop functions (SS1, SS2); safe limited position (SLP) or safe limited speed (SLS) functions; guard monitoring for protective enclosures; two-hand control systems; light curtain monitoring; safety-related sensor monitoring; or mode selection functions with enforced safety logic. Safety functions may also include mechanisms for fault detection, such as cyclic redundancy checks (CRC), watchdog timers, or communication integrity checks using timeouts and sequence verification. Further safety applications may involve monitoring of critical process variables, execution of safe shutdown procedures, control of safety-relevant actuators, and the implementation of safety logic in response to fault conditions.

A function block may be a software function block which may act as a safety channel e.g. for a processing part inside a controller. A function block or safety channel may refer to a functional execution path that performs safety-relevant processing in accordance with defined safety requirements, such as those specified by functional safety standards like IEC 61508, IEC 62061, IEC 61511 or other safety standards. Traditionally, safety channels have been implemented using dedicated hardware circuits or separate physical controllers. However, with the increasing use of software-based architectures and runtime environments, it is possible for a function block-executed in software-to constitute a logical safety channel. A function block may refer to a function block instance or may be executed on or within a respective function block instance.

Such a software-implemented safety channel may comprise the necessary logic to receive, process, and evaluate safety-relevant input data and to generate corresponding safety outputs. It may include diagnostic functions, plausibility checks, state machines or redundancy mechanisms, and may operate independently or in cooperation with other channels. The software safety channel can be executed within an isolated or certified runtime environment on a computing unit, and may be validated to ensure that it meets the required Safety Integrity Level (SIL). This approach enables a more flexible and scalable implementation of safety functions without being constrained to specific hardware-based safety modules.

The term "geographically separated" may herein refer to a physical distribution of computing units such that the respective computing units are not located within the same immediate physical enclosure or cabinet, but are instead installed at different locations within a plant, facility or across separate sites. This separation may range from different sections of a production line to entirely different buildings or geographical regions. Geographical separation can enhance system resilience by reducing the likelihood that a localized fault, such as a power failure, hardware defect or environmental disturbance, affects all computing units simultaneously. In safety-critical applications, geographically separated computing units may execute redundant instances of safety-related function blocks, thereby contributing to fault tolerance, spatial diversity and compliance with high safety integrity requirements. Moreover, available computing resources may be exploited in an efficient manner regardless of geographical separation.

In the field of automation IEC 61499 has already introduced a component-oriented approach based on event-driven function blocks, enabling distributed and modular control applications across networked devices allowing decoupling automation logic from specific hardware platforms to allow for improved scalability, maintainability and system integration. The corresponding hardware and/or software infrastructure applied in such systems may therefore be also exploited for the idea of the invention. Hence, the invention may be easily applied to such systems. The industrial automation system may for example be integrated into a production line, a building automation, a robot control system, a process system or any other suitable automation system.

Owing to the modular approach of the invention a higher performance level, i.e. a higher SIL level and/or a higher Hardware Fault Tolerance, may be achieved. For example, for executing a safety function multiple available computing units may be used or consulted in order to distribute the function blocks to different units, thereby achieving more redundancy and higher safety levels. Moreover, this approach provides more flexibility and thus a higher comfort level, e.g. a firmware update may be performed while the system is still running by means of additional computing units and/or function blocks.

Further embodiments of the invention can be found in the description, the subclaims and the drawings.

According to a first embodiment the local computing unit and/or the remote computing unit are connected to a respective PLC (programmable logic controller) of the industrial automation system, preferably the local computing unit and/or the remote computing unit are part of a respective PLC. For example, already available PLCs used for automating and/or controlling machines may be used for executing the function blocks of the safety function. The proposed system is therefore designed to allow seamless integration into existing automation infrastructures without requiring substantial modifications to the underlying hardware or communication architecture. By relying on standardized interfaces and modular software components, the invention can be deployed alongside conventional control systems and extended progressively. This facilitates upgrading of industrial installations with enhanced functionality-such as distributed safety processing-while preserving compatibility with legacy devices and networks. As a result, system integrators and operators benefit from improved flexibility and reduced implementation effort. A computing unit may e.g. be a programmable industrial controller, an edge device, an embedded processor, a virtualized runtime environment, or any other processing entity configured to execute one or more function blocks within an automation or safety application.

According to an embodiment the local computing unit and/or the remote computing unit are further configured to execute one or more application blocks of an automation application. The automation application may be implemented as a distributed application in accordance with IEC 61499. The automation application blocks and the function blocks executed by a respective computing unit may rely on or access the same computing resources or different independent computing resources. The automation application may be a manufacturing automation application, process control automation application, energy management automation application, logistics automation application, or facility automation application.

According to an embodiment the industrial automation system comprises multiple local computing units and/or multiple remote computing units, wherein each of the local computing units and/or each of the multiple remote computing units are configured to execute a respective function block of the first safety function. At least some of the local computing units and/or remote computing units may be part of a hardware island, i.e. a hardware cluster, or a subsystem which may comprise further local and remote computing units, respectively. The local and/or remote computing units of a respective hardware cluster may communicate with each other via a physical connector for safe communication, a ring network wiring topology, a double-ring network wiring topology and/or a wireless mesh transmitter. Furthermore, at least one function block may transmit or receive data via multicast Ethernet communication, enabling data to be distributed simultaneously to a plurality of computing units of the industrial automation system. However, other communication options may include unicast or broadcast Ethernet communication, as well as industrial communication protocols such as PROFIBUS, Modbus, or CANopen, or safety-certified fieldbus protocols such as PROFIsafe, CIP Safety, or FSoE. Communication may also take place over wireless links or virtualized networking environments within containerized or cloud-based deployments.

In some embodiments, at least one of the additional remote computing units may be in the vicinity of the at least one remote computing unit or physically connected to the at least one remote computing unit. In some embodiments, at least one of the additional remote computing units may be geographically separated from the at least one remote computing unit and from the local computing unit. I.e. the respective function blocks may be executed on computing units located at multiple geographically distinct sites, thereby enabling the implementation of safety applications across spatially separated installations.

It is to be noted that, although some embodiments described herein refer to a single local computing unit and/or a single remote computing unit, these explanations and embodiments apply to all local and/or all remote computing units of the system. The same applies with respect to the mentioned function blocks.

According to an embodiment only the first function block is executed by the local computing unit, wherein the remaining function blocks are executed by the one or more remote computing units. By allowing only a single function block to be implemented locally while other associated function blocks may be executed remotely, the system provides increased flexibility in deployment. This architecture reduces the need for duplicating hardware resources at each site and enables more efficient use of distributed computing capacities. Additionally, it simplifies system integration and modification, as functional extensions or updates can be realized without requiring physical access to all locations. In the event of a connection issue one function block is still locally implemented as a fallback instance in order to execute the safety function locally. This approach supports scalable, modular automation and is particularly beneficial in applications involving geographically dispersed installations.

According to an embodiment the first function block or the second function block acts as a master and the respective other function block acts as a slave, or the first function block and the second function block are configured to operate in a peer-to-peer manner, wherein both function blocks are configured to independently analyze data and/or exchange results. The master function block may comprise a master function gathering results of the remaining function blocks, evaluating the results and/or outputting a safety result. When the function blocks work in a peer-to-peer manner each function block may gather results of other function blocks and compare the gathered results with the own results, evaluate the results and/or output a safety result. Based on the safety result of the safety function a safety reaction may be triggered or not. In some embodiments, an evaluation unit, e.g. an I/O device, may receive and compare the results of the first and second function block and output the safety result. The evaluation unit may be different from the local computing unit and the remote computing unit.

According to an embodiment the first safety function comprises at least 3, preferably at least 5, more preferably at least 7 or more preferably at least 9 function blocks which are executed at least partially by the local and at least partially by the remote computing unit. The function block may be further distributed to other local computing units and/or remote computing units. Increasing the number of function blocks dedicated to the execution of a safety function allows for improved fault tolerance, enhanced diagnostic coverage, and greater flexibility in the system architecture. Multiple function blocks may execute redundantly and independently, either on the same or on different computing units, thereby reducing the likelihood of a single point of failure. The system may further implement diverse function blocks using different software versions or execution environments to increase resistance to systematic faults. The industrial automation system may have a 2oo3 (2-out-of-3), 3oo5, 5oo7, 7oo9 or even higher (N-out-of-M) voting architecture to enhance fault tolerance and support high Safety Integrity Levels (SIL). In a NooM (N-out-of-M) voting architecture, M independent function blocks or channels may execute the same safety function, preferably in parallel. The outputs of these M function blocks may then be evaluated using a voting mechanism, where at least N of the M outputs must match for a valid result to be accepted.

According to an embodiment each function block is executed on a respective runtime environment. This allows the individual function blocks to operate independently from one another, providing increased modularity and fault isolation. By assigning each function block to a separate runtime environment, the system can better utilize distributed computing resources and enhance robustness against software or hardware failures affecting a particular environment. It further enables scalability and facilitates compliance with higher Safety Integrity Levels (SIL), without requiring excessive hardware duplication. This configuration also supports flexible deployment across heterogeneous platforms, such as different operating systems, virtualization layers, or hardware devices, which is particularly advantageous in complex or geographically distributed automation or safety systems.

The runtime environment may comprise the necessary software and system resources for executing the respective function block, including a scheduler, memory management, communication interfaces and access to hardware or virtualized components. The runtime environment may be provided by a virtual PLC, which may emulate the behavior of a physical PLC and may enable the execution of safety-related function blocks in a virtualized environment. By assigning each function block to a separate runtime environment, logical isolation can be achieved, enabling modular deployment, independent lifecycle management and increased robustness in the case of system faults. The function blocks may operate on separate computing platforms, processor cores and/or software containers.

According to an embodiment the first function block and the second function block are based on differing software libraries. This software-level diversification contributes to improved fault tolerance, particularly with respect to systematic faults that could arise from a defect in a single library implementation. By relying on separate libraries-potentially developed by different teams, vendors, or according to distinct design principles-the likelihood of a common-cause failure affecting both function blocks is significantly reduced. This architectural strategy supports the fulfillment of high safety integrity requirements, such as those defined by IEC 61508 or ISO 13849, and is particularly beneficial in systems requiring redundancy through diversity. Furthermore, the use of differing software libraries allows for the integration of function blocks tailored to specific runtime environments or computing platforms, thereby enhancing compatibility and deployment flexibility within heterogeneous system landscapes. However, it is to be noted that the first function block and the second function block may be also be based on common software libraries.

According to an embodiment the local computing unit and/or the remote computing unit are configured to execute further function blocks sequentially and/or in parallel. For example, multiple function blocks may be executed on a respective computing unit, e.g. on a multi-core processor, wherein each core of the processor is configured to execute a respective function block in parallel. Additionally, or alternatively, multiple function blocks, e.g. of different safety applications or of different parts of a larger safety application, may be executed sequentially by a respective computing unit. Any given CPU, CPU core or SoC may execute multiple function blocks sequentially, without requiring any diversification. The parallel execution of function blocks may provide fast processing and/or response times, wherein sequential execution may further increase redundancy, safety and reliability and may enable the execution of multiple and/or larger safety functions.

According to an embodiment the industrial automation system comprises a control unit configured to determine based on a type of the first safety function the number of function blocks to be executed in association with the first safety function, in particular the control unit may be a master control unit comprising hard-coded algorithmic rules. In some embodiments, the control unit may be the local computing unit or the remote computing unit. However, the control unit may also be a separate and/or independent entity. For example, certain safety functions may require only a lower Safety Integrity Level, e.g., SIL1 or SIL2, in combination with a hardware fault tolerance of HFT0, and may therefore be executed using a single function block. In contrast, other safety functions may require a higher Safety Integrity Level, e.g., SIL3 or above, and a hardware fault tolerance of HFT1 or greater, and may thus be executed using two, three, four, five, or more function blocks operating redundantly. This allows for a tailored allocation of system resources according to safety requirements, improving efficiency and scalability. For example, safety functions may be categorized in respective safety requirement levels, e.g. High, Mid and Low, which may indicate the number of required function blocks to meet the safety requirement.

According to an embodiment the control unit is configured to distribute the execution of the function blocks among the local computing unit and the one or more remote computing units. This distribution allows for flexible allocation of computational tasks based on available resources, real-time requirements, safety constraints and/or network topology. The control unit may act as a master control unit and dynamically assign function blocks to different computing units during operation, for example in response to load conditions, faults and/or system configuration changes. The control unit may e.g. determine the availability of computing resources of the local computing unit and the one or more remote computing units and distribute the execution of the function blocks to computing units which may provide enough computational resources to safely execute a respective function block. Such a distributed execution model enables scalable and modular system architectures, supports the efficient use of geographically dispersed processing resources and facilitates redundancy or separation strategies for achieving high safety levels. Moreover, it allows function blocks to be deployed close to the relevant sensors, actuators or subsystems, thereby reducing latency and improving responsiveness.

According to an embodiment the one or more function blocks executed on the one or more local computing units and/or the one or more function blocks executed on the one or more remote computing units jointly form an on-premise cloud with respect to the first safety function. This means that the respective computing units collaboratively contribute to the execution, monitoring and/or redundancy of the safety function, while abstracting the underlying hardware distribution. The safety cloud may represent a distributed safety architecture in which safety-related functions are executed collaboratively by multiple function blocks deployed across different runtime environments and/or computing resources, thereby enabling dynamic load balancing, fault tolerance, and scalability.

According to an embodiment the local computing unit is further configured to execute at least one function block of a second safety function. The second safety function may also be a function which is executed in a distributed manner across multiple computing units. Hence, at least one further function block of the second safety function may be executed by the remote computing unit and/or other remote computing units. The industrial automation system may therefore be configured to distribute the execution of multiple safety functions across multiple computing units which are geographically separated enabling even more flexibility and scalability. For example, the first function block of the first safety function and the at least one function block of the second safety function may be executed by the local computing unit in parallel or sequentially. Foregoing explanations and embodiments may apply to the second safety function and/or the at least one function block of the second safety function accordingly. Furthermore, the local computing unit and/or the remote computing unit may be configured to execute function blocks associated with further safety functions.

Another aspect of the invention is directed at an industrial automation system, comprising: one or more local computing units for executing a plurality of function blocks of a safety function, wherein preferably the function blocks jointly form an on-premise or local cloud with respect to the safety function. The one or more local computing units may in this case be arranged in the same housing, the same cabinet, the same plant or facility. The one or more local computing units may preferably be configured to execute at least three function blocks such that a 2oo3 redundancy may be achieved, more preferably at least five function blocks such that a 3oo5 redundancy or higher may be achieved. The at least three function blocks may be freely distributed among the one or more computing units. The function blocks may be executed on multiple CPUs, on the same CPU and/or on different cores of the same CPU, in particular sequentially and/or in parallel. It is to be noted that explanations and embodiments previously described with respect to the local computing unit(s) and/or function blocks apply accordingly.

A further aspect of the invention is directed at a method for executing a first safety function, comprising:
executing a first function block of a first safety function using a local computing unit, and
executing a second function block of the first safety function using a remote computing unit,
wherein the local computing unit and the remote computing unit are geographically separated and communicate via a network.

The explanations and embodiments with respect to the industrial automation system apply accordingly to the method, in particular with regard to advantages and embodiments.

It should be noted that any combination of the foregoing embodiments is possible as long as this has not been explicitly excluded.

In the following, the invention is illustrated by way of example with reference to the drawings:
- Fig. 1: shows a schematic illustration of an industrial automation system;
- Fig. 2: shows a schematic illustration of an embodiment of the industrial automation system;
- Fig. 3: shows a schematic illustration of another embodiment of the industrial automation system;

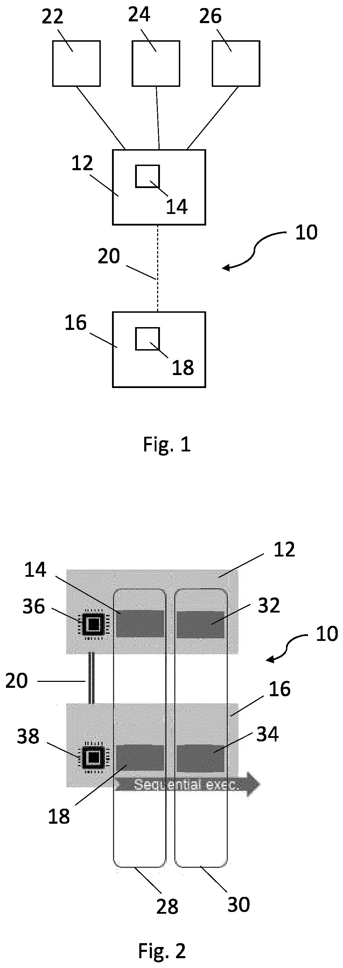

Fig. 1 shows an industrial automation system 10. The industrial automation system 10 comprises a local computing unit 12 for executing a first function block 14 of a safety function, and a remote computing unit 16 for executing a second function block 18 of the safety function, wherein the local computing 14 unit and the remote computing unit 18 are geographically separated and communicate via a network 20. The network 20 may comprise an industrial Ethernet, a fieldbus system, or any other suitable wired or wireless communication infrastructure capable of supporting deterministic or real-time data exchange.

The local computing unit 12 is connected to local actuators 22, e.g. machines, sensors 24 and/or controllers 26 or other local computing units which may interact with each other as part of the automation application. The local computing unit 12 and/or the remote computing unit 16 may e.g. be a PLC configured to control the operation of the industrial automation system 10.

The first and second function block 14,16 may process data provided by the actuators 22, the sensors 24 and/or the controllers 26 and output a respective safety result e.g. by performing a safety operation. The safety result of the first function block 14 and the safety result of the second function block 16 may preferably be determined independently. The remote computing unit 16 may receive the data, i.e. data from the actuators 22, the sensors 24 and/or the controllers 26, necessary for executing the second function block 18 from the local computing unit 12 via the network 20. The results of the second function block 18 may be transmitted to the first function block 14 which may act as a master. The first function block 14 may evaluate the results by comparing the results of the second function block 18 with the results of the first function block 14. If the results are identical or a deviation of the results is smaller than a deviation threshold value, the result of the safety function may indicate that no fault condition is present. However, if the results of the first and second function blocks 14,18 are not identical and/or a deviation of the results is higher than a deviation threshold value, the result of the safety function may indicate that a fault condition is present and a safety reaction may be triggered. The safety reaction may comprise stopping one of the actuators 22, outputting a warning signal and/or putting the industrial automation system 10 into a safety mode, e.g. into a restricted operation mode.

Fig. 2 shows a schematic illustration of an embodiment of the industrial automation system 10. The local computing unit 12 is configured to execute a first function block 14 of a first safety function 28 and a first function block 32 of a second safety function 30, wherein the remote computing unit 16 is configured to execute a second function block 18 of the first safety function 28 and a second function block 34 of the second safety function 30. For example, the local computing unit 12 may execute the first function block 14 of the first safety function 28 and the first function block 32 of a second safety function 30 on a respective processor 36, e.g. a CPU or a single core of a multi-core CPU, sequentially. Accordingly, the remote computing unit 16 may execute the second function block 18 of the first safety function 28 and the second function block 34 of the second safety function 30 on a respective processor 38 sequentially. Hence, by only using two computing units 12,16 two safety functions 28,30 may be implemented, each comprising two function blocks and thereby providing a 1oo2 safety redundancy. It should be noted that the local computing unit 12 and the remote computing unit 16 may also execute further function blocks corresponding to the first, to the second or any other safety function.

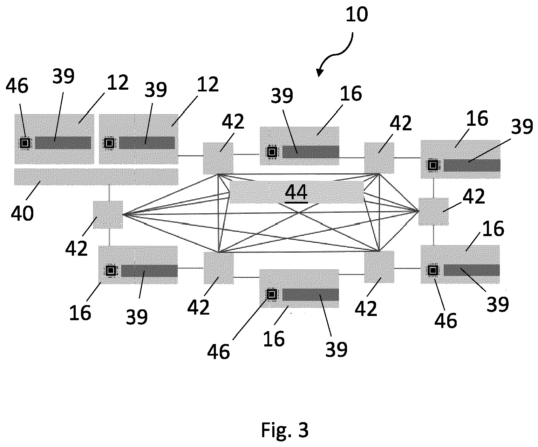

Fig. 3 shows a schematic illustration of another embodiment of the industrial automation system 10. The industrial automation system 10 comprises two local computing units 12, each executing a respective function block 39. The local computing units 12 are connected to a backplane 40 for safe communication, e.g. a safe backplane connector. The local computing units 12 and/or the backplane 40 may further communicate with five remote computing units 16 via a respective router 42 or switch. The safety-related communication between the local computing units 12 and/or the remote computing units 16 is carried out via a safety fieldbus 44. The safety fieldbus 44 allows for the exchange of safety-relevant data in compliance with applicable functional safety standards, such as IEC 61508, IEC 62061, IEC 61511 or ISO 13849. The communication protocol implemented on the safety fieldbus 44 includes dedicated mechanisms for error detection, such as cyclic redundancy checks, sequence counters, and timeout monitoring, ensuring a reliable and deterministic transmission of safety-critical information. Each computing unit 12,16 may be configured to act as a safety node, capable of transmitting and/or receiving safe I/O signals, command data and/or monitoring information, thereby enabling the distributed execution of safety functions across multiple geographically or topologically separated locations. The use of a certified safety fieldbus 44 ensures that the system can fulfill high safety integrity levels (e.g., SIL3 or higher) without requiring dedicated hardwired signal paths between the computing units 12,16.

The industrial automation system 10 according to Fig. 3 may be capable of implementing a voting architecture having a "5oo7" redundancy. A control unit, not shown in Fig. 3, may dynamically assign function blocks to different computing units 12,16 during operation, for example in response to load conditions, faults and/or system configuration changes. The control unit may e.g. determine the availability of computing resources of the local computing units 12 and the one or more remote computing units 16 and distribute the execution of the function blocks 39 to computing units 12,16 which may provide enough computational resources to safely execute a respective function block 39. For example, the control unit may decide which of the processors, e.g. CPUs 46, of a respective computing unit 12,16 are used in any specific moment to form a 2oo3 voting architecture. In the case of a firmware update or upgrade, in a first phase a first part of the local computing units 12 and/or remote computing units 16 may be updated, while a second part of the local computing units 12 and/or the remote computing units 16 may be in active use. In a second phase, after the first part of the local computing units 12 and/or remote computing units 16 are updated, the second part of the local computing units 12 and/or the remote computing units 16 may be updated subsequently. For example, four computing units 12,16 out of the seven available computing units 12,16 may be updated in the first phase, while the remaining three computing units 12,16 may be updated in the second phase. Hence, during the entire update process a "2oo3" redundancy may be maintained. In particular, the safety function may be executed based on only the remote computing units 16 connected via a mesh topology.

### List of reference signs

- 10: industrial automation system
- 12: local computing unit
- 14: first function block
- 16: remote computing unit
- 18: second function block
- 20: network
- 22: actuators
- 24: sensors
- 26: controllers
- 28: first safety function
- 30: second safety function
- 32: first function block of the second safety function
- 34: second function block of the second safety function
- 36, 38: processor
- 40: backplane
- 42: router
- 44: safety fieldbus
- 46: CPUs

## Claims

1. Industrial automation system (10), comprising:
at least one local computing unit (12) for executing a first function block (14) of a first safety function (28), and
at least one remote computing unit (16) for executing a second function block (18) of the first safety function (28),
wherein the local computing unit (12) and the remote computing unit (16) are geographically separated and communicate via a network (20).

2. Industrial automation system (10) according to claim 1,
wherein the local computing unit (12) and/or the remote computing unit (16) are connected to a respective PLC of the industrial automation system (10), preferably the local computing unit (12) and/or the remote computing unit (16) are part of a PLC of the industrial automation system (10), respectively.

3. Industrial automation system (10) according to claim 1 or 2,
wherein the local computing unit (12) and/or the remote computing unit (16) are further configured to execute one or more application blocks of an automation application.

4. Industrial automation system (10) according any one of the preceding claims, comprising:
multiple local computing units (12) and/or multiple remote computing units (16),
wherein each of the local computing units (12) and/or each of the multiple remote computing units (16) are configured to execute a respective function block of the first safety function (28).

5. Industrial automation system (10) according to any one of the preceding claims,
wherein only one the first function block (14) is executed by the local computing unit (12), wherein the remaining function blocks are executed by the one or more remote computing units (16).

6. Industrial automation system (10) according to any one of the preceding claims,
wherein the first function block (14) or the second function block (18) acts as a master and wherein the respective other function block acts as a slave, or
wherein the first function block (14) and the second function block (18) are configured to operate in a peer-to-peer manner, wherein both function blocks (14, 18) are configured to independently analyze data and/or exchange results.

7. Industrial automation system (10) according to any one of the preceding claims,
wherein the first safety function comprises at least 3, preferably at least 5, more preferably at least 7 or more preferably at least 9 function blocks which are executed at least partially by the local and at least partially by the remote computing unit (16).

8. Industrial automation system (10) according to any one of the preceding claims,
wherein each function block (14, 18) is executed on a respective runtime environment and/or the function blocks are based on differing software libraries.

9. Industrial automation system (10) according to any one of the preceding claims,
wherein the local computing unit (12) and/or the remote computing unit (16) are configured to execute further function blocks sequentially and/or in parallel.

10. Industrial automation system (10) according to any one of the preceding claims, comprising:
a control unit configured to determine based on a type of the first safety function (28) the number of function blocks to be executed in association with the first safety function (28), in particular the control unit may be a master control unit comprising hard-coded algorithmic rules.

11. Industrial automation system (10) according to claim 10,
wherein the control unit is configured to distribute the execution of the function blocks among the local computing unit (12) and the one or more remote computing units (16).

12. Industrial automation system (10) according to any one of the preceding claims,
wherein the one or more function blocks executed on the one or more local computing units (12) and/or the one or more function blocks executed on the one or more remote computing units (16) jointly form an on-premise cloud with respect to the first safety function (28).

13. Industrial automation system (10) according to any one of the preceding claims,
wherein the local computing unit (12) is further configured to execute at least one function block of a second safety function (30).

14. Industrial automation system (10), comprising:
one or more local computing units (12) for executing a plurality of function blocks of a safety function.

15. Method for executing a first safety function (28), comprising:
executing a first function block (14) of a first safety function (28) using a local computing unit (12), and
executing a second function block (18) of the first safety function (28) using a remote computing unit (16),
wherein the local computing unit (12) and the remote computing unit (16) are geographically separated and communicate via a network (20).
